# EUROPÄISCHE PATENTSCHRIFT

(11) **EP 3 938 255 B1**
(45) Veröffentlichungstag und Bekanntmachung des Hinweises auf die Patenterteilung: **30.08.2023**
(21) Anmeldenummer: 20711807.6
(22) Anmeldetag: 04.03.2020
(51) Int. Cl.: B60T 8/32, B60T 8/88, B60T 8/94

(54) **ELEKTROPNEUMATISCHES BREMSSYSTEM FÜR NUTZFAHRZEUG**
ELECTRO-PNEUMATICAL BRAKE SYSTEM FOR UTILITY VEHICLE
SYSTÈME DE FREINAGE ELECTRO-PNEUMATIQUE POUR VÉHICULE UTILITAIRE

(30) Priorität: 12.03.2019 DE 102019106243
(43) Veröffentlichungstag der Anmeldung: 19.01.2022
(73) Patentinhaber: ZF CV Systems Europe BV, 1170 Brussels (BE)
(72) Erfinder: SCHMIDT, Detlef, 30989 Gehrden (DE); VAN THIEL, Julian, 30938 Grossburgwedel (DE)
(74) Vertreter: Rabe, Dirk-Heinrich
(86) Internationale Anmeldenummer: PCT/EP2020/055663
(87) Internationale Veröffentlichungsnummer: WO 2020/182569

(56) Entgegenhaltungen:
- EP-A1- 2 942 249
- US-A1- 2019 054 909

## Beschreibung

Die Erfindung betrifft ein elektropneumatisches Bremssystem für ein Nutzfahrzeug.

Betriebsbremssysteme, insbesondere elektronische Bremssysteme (EBS) weisen im Allgemeinen eine zentrale elektrische Brems-Steuereinrichtung auf, die durch Ausgabe elektrischer Betriebsbremssignale Bremsvorgänge an dem vorderen und hinteren Radbremsen aussteuern kann. Hierbei ist zum Teil der Einsatz einer zweiten Brems-Steuereinrichtung bzw. HilfsSteuereinrichtung vorgesehen, die bei Ausfall der zentralen Brems-Steuereinrichtung einen hilfsweisen bzw. zumindest rudimentären Bremsbetrieb oder Betriebsbremsbetrieb aufrecht erhalten kann, was auch als fail operation braking system (FOBS) bezeichnet wird.

Im regulären Bremsbetrieb kann die zentrale Brems-Steuereinrichtung im Allgemeinen Bremsschlupfregelungen an dem einzelnen Radbremsen durchführen. In einem Fail-Operation-Bremsbetrieb sind derartige Bremsschlupfregelungen jedoch im Allgemeinen nicht mehr möglich.

Die EP 0 133 287 B1 beschreibt ein hydraulisches automatisches Bremssystem, bei dem ein Raddrehzahlsensor ein pulsbreitenmoduliertes Sensorsignal ausgibt. Hierbei sind der vordere linke Raddrehzahlsensor und der vordere rechte Raddrehzahlsensor, sowie die hinteren Raddrehzahlsensoren an unterschiedliche Steuereinheiten angeschlossen.

Die drei Steuereinheiten sind hierbei miteinander verbunden, insbesondere auch für einen Fehlerfall.

Die US 2019/054909 A1 beschreibt ein Bremssystem zur redundanten Radgeschwindigkeitsfeststellung. Das Bremssystem umfasst eine erste elektronische Steuereinheit, die mit einer ersten Stromversorgung verbunden ist, und eine zweite elektronische Steuereinheit, die mit einer zweiten Stromversorgung verbunden ist. Die zweite elektronische Steuereinheit ist kommunikativ mit der ersten elektronischen Steuereinheit gekoppelt. Das Bremssystem umfasst auch einen ersten bis vierten Radgeschwindigkeitssensor. Der erste Radgeschwindigkeitssensor und der zweite Radgeschwindigkeitssensor sind direkt mit der ersten elektronischen Steuereinheit gekoppelt und werden von dieser gespeist und sind kommunikativ mit der zweiten elektronischen Steuereinheit gekoppelt. Der dritte Radgeschwindigkeitssensor und der vierte Radgeschwindigkeitssensor sind direkt mit der zweiten elektronischen Steuereinheit gekoppelt und werden von dieser gespeist und sind kommunikativ mit der ersten elektronischen Steuereinheit gekoppelt.

Die EP 2 942 249 A1 beschreibt ein druckmittelbetriebenes Bremssystem für ein Kraftfahrzeug, insbesondere Nutzfahrzeug, mit einer Betriebsbremseinrichtung und einer Feststellbremseinrichtung. Dabei weist die Feststellbremseinrichtung ein Feststellbremsmodul und eine mit dem Feststellbremsmodul gekoppelte elektrische Betätigungseinrichtung auf. Die Betriebsbremseinrichtung weist einen Bremswertgeber zum Erzeugen mindestens eines elektrischen Bremsanforderungssignals auf. Erfindungsgemäß ist der Bremswertgeber mittels mindestens einer Datenleitung mit dem Feststellbremsmodul zum Herstellen einer Datenverbindung mittelbar oder unmittelbar verbunden, wobei über diese Datenleitung das Bremsanforderungssignal übertragbar ist.

Es zeigt sich jedoch, dass dies im Allgemeinen sehr spezielle Lösung sind und insbesondere für elektropneumatische Bremssysteme, die in Nutzfahrzeugen eingesetzt werden, nicht einsetzbar sind.

Der Erfindung liegt die Aufgabe zugrunde, ein elektropneumatisches Bremssystem für Nutzfahrzeuge und ein Verfahren zu dessen Betrieb bzw. Steuerung zu schaffen, die einen sicheren Fail-Operation-Betrieb ermöglichen.

Diese Aufgabe wird durch ein elektropneumatisches Bremssystem nach Anspruch 1 und ein Verfahren zu dessen Steuerung gelöst. Die Unteransprüche beschreiben bevorzugte Weiterbildungen. Weiterhin ist ein Fahrzeug mit dem elektropneumatischen Bremssystem vorgesehen, das insbesondere zur Durchführung des erfindungsgemäßen Verfahrens vorgesehen ist.

Somit ist nicht nur ein Fail-Operation-Betrieb bzw. Hilfs-Bremsbetrieb zur Ansteuerung der Radbremsen bei elektrischem Ausfall der zentralen Brems-Steuereinrichtung durch die zweite Brems-Steuereinrichtung vorgesehen, sondern ergänzend ein Hilfs-Bremsschlupfbetrieb durch die zweite Brems-Steuereinrichtung. Hierzu sind die vier Radbremszahlsensoren der beiden Räder der Vorderachse und der beiden Räder der Hinterachse in zwei Raddrehzahlsensor-Gruppen unterteilt, die jeweils von der zentralen Brems-Steuereinrichtung oder der zweiten Brems-Steuereinrichtung ausgelesen werden. Insbesondere sind hierzu direkte Signalleitungen zwischen den Raddrehzahlsensoren und der jeweiligen Brems-Steuereinrichtung vorgesehen, die - in üblicher Weise - eine hohe Signalübertragungs-Sicherheit gewährleisten.

Aufgrund der direkten Signalleitungen ist eine redundante Weiterleitung eines Raddrehzahlsensorsignals von einem Raddrehzahlsensor an beide Steuereinrichtungen im Allgemeinen nicht ohne den ergänzenden Hardwareaufwand, z. B. verzweigende Kabel (Y-Kabel) möglich. Um derartige verzweigende Kabel oder den Einsatz doppelter Raddrehzahlsensoren an den einzelnen Fahrzeugrädern zu vermeiden, werden die Raddrehzahlsensoren in die zwei Raddrehzahlsensor-Gruppen unterteilt. Somit fällt kein zusätzlicher Hardware-Aufwand durch spezielle Verzweigungs-Kabel oder doppelte Raddrehzahlsensoren an.

Die zweite Brems-Steuereinrichtung ermöglicht nicht nur einen redundanten Brems-Steuerbetrieb (Hilfs-Bremsbetrieb) durch Ansteuerung der Radbremsen bei elektrischem Ausfall der zentralen Brems-Steuereinrichtung, sondern ergänzend vorzugsweise einen redundanten Bremsschlupfregelbetrieb, indem sie die Raddrehzahlen der Raddrehzahlsensoren der anderen Raddrehzahlsensor-Gruppe, die sie nicht direkt ausliest, abschätzt. Hierbei kann insbesondere ein Abschätzen der Raddrehzahlsensoren durch einen Raddrehzahlsensor der gleichen Achse vorgesehen sein, z. B. ein Abschätzen des rechten vorderen Raddrehzahlsensors durch Gleichsetzen der linken vorderen Raddrehzahlen und rechten vorderen Raddrehzahlen. Hierzu kann insbesondere eine Ausführungsform mit kreuzweiser Auslegung der Raddrehzahlsensoren vorgesehen sein, sodass der linke vordere Raddrehzahlsensor und der hintere rechte Raddrehzahlsensor einer ersten Raddrehzahlsensor-Gruppe und die anderen beiden Raddrehzahlsensoren der anderen Raddrehzahlsensor-Gruppe zugeordnet werden. Diese Ausführungsform ermöglicht somit ein direktes Abschätzen der verbleibenden Raddrehzahlen.

Gemäß einer hierzu alternativen Ausführungsform können die beiden vorderen Raddrehzahlsensoren zusammen mit einem der beiden hinteren Raddrehzahlsensoren in einer der Raddrehzahlsensor-Gruppen aufgenommen werden, sodass der andere hintere Raddrehzahlsensor in der anderen Raddrehzahlsensor-Gruppe verbleibt. Dem liegt die Überlegung zugrunde, dass die hinteren Raddrehzahlen grundsätzlich über die Drehzahlen einer Getriebeausgangswelle abgeschätzt werden können, da bei einem Nutzfahrzeug im Allgemeinen die Räder der Hinterachse angetrieben sind und somit eine Getriebeausgangswelle, die von einer Getriebesteuerung sensiert wird, entsprechende Drehzahlen der Getriebeausgangswelle liefert, aus denen die Raddrehzahlen entsprechend abgeschätzt werden können.

Somit kann insbesondere die Raddrehzahlsensor-Gruppe der zentralen Brems-Steuereinrichtung die beiden vorderen Raddrehzahlen und einen der beiden hinteren Raddrehzahlen aufnehmen, sodass auch Probleme z. B. in der direkten Datenverbindung zwischen den Brems-Steuereinrichtungen zu einer relativ geringen Funktions-Beeinträchtigung führen, da die zentrale Brems-Steuereinrichtung bereits drei der vier Raddrehzahlen direkt ausgelesen hat.

Weiterhin können die Raddrehzahlsensoren auch achsweise gruppiert werden, wobei dann wiederum die Raddrehzahlen der Hinterachse im Bedarfsfall über die Drehzahlen einer Getriebeausgangswelle abgeschätzt werden können.

Weiterhin ist auch eine Ausführungsform mit seitenweiser Zuordnung der Raddrehzahlsensoren möglich, sodass die linken Raddrehzahlsensoren der Vorderachse und Hinterachse in einer Raddrehzahlsensor-Gruppe und die beiden rechten Raddrehzahlsensoren in der anderen Raddrehzahlsensor-Gruppe angeordnet werden.

Weiterhin kann in jeder dieser Ausführungsformen die zweite Brems-Steuereinrichtung als elektrische Parkbrems-Steuereinrichtung ausgebildet sein, bzw. die ohnehin für eine elektrische Parkbremse vorgesehene elektrische Parkbremse-Steuereinrichtung dient ergänzend als zweite Brems-Steuereinrichtung, um den redundanten Betriebsbremsbetrieb bzw. Bremssteuerbetrieb zu gewährleisten. Hierbei liest dann die Parkbrems-Steuereinrichtung die Raddrehzahlsensoren einer der beiden Raddrehzahlsensor-Gruppen aus. Eine derartige Ausbildung weist einige Vorteile auf; so kann die Parkbrems-Steuereinrichtung insbesondere sogenannte Tristop-Zylinder mit kombiniertem Betriebsbrems-Zylinder und Feststellbrems-Zylinder ansteuern, wobei dann ein Fail-Operation-Bremsbetrieb im Allgemeinen durch pneumatische inverse Ansteuerung der Feststellbrems-Zylinder gewährleistet wird, d. h. durch Belüften der Feststellbrems-Zylinder zum Lösen der Parkbremse, und Entlüften der Feststellbrems-Zylinder zum Einlegen der Feststellbremse, um den hilfsweisen bzw. redundanten Betriebsbremssystem zu ermöglichen.

Hierbei ist entsprechend auch eine - hilfsweise bzw. rudimentäre - Bremsschlupfregelung möglich, durch Ausgabe entsprechender pneumatischer Ansteuersignale an den Feststellbrems-Zylinder der jeweiligen Bremse der Hinterachse. Somit entfällt in dem hilfsweisen Bremsbetrieb auch bereits z. B. eine pneumatische Ansteuerung eines Radbremsmoduls der Hinterachse durch die zweite Brems-Steuereinrichtung.

Die beiden Brems-Steuereinrichtungen sind vorzugsweise mit getrennten Spannungsversorgungen ausgestattet, d. h. zwei nicht voneinander abhängende Spannungsversorgungen, sodass auch bei Ausfall einer der Spannungsversorgungen die andere Brems-Steuereinrichtung weiterhin elektrisch versorgt wird. Hierzu können z. B. im Fahrzeug zwei getrennte Batterien vorgesehen sein.

Die Bremsschlupfregelung kann im normalen Bremsbetrieb insbesondere über ABS-Sperrventile erfolgen. So kann insbesondere an der Vorderachse vor jeder Radbremse ein ABS-Sperrventil vorgesehen sein, das direkt elektrisch von der zentralen Brems-Steuereinrichtung angesteuert wird. Bei Ausbildung als EBS kann z. B. ein Vorderachs-Bremsmodulator zwei Proportional-Relaisventile aufweisen, die eine direkte Aussteuerung des analogen Bremsdrucks für die jeweilige Seite aus einem angeschlossenen Druckluftvorrat ermöglichen, in Abhängigkeit der aufgenommenen Betriebsbremssignale der zentralen Brems-Steuereinrichtung. Die Bremsschlupfregelung wird somit durch die nachgeschalteten ABS-Sperrventile vorgenommen. Die hilfsweise Bremsschlupfregelung bei Ausfall der zentralen Brems-Steuereinrichtung kann somit durch die pneumatische Hilfs-Steuerung der zweiten Brems-Steuereinrichtung erfolgen, die z. B. über ein vorderes Bypass-Ventil erfolgt, das als elektromagnetisches Ventil von der zweiten Brems-Steuereinrichtung angesteuert wird und z. B. einen analogen Brems-Steuerdruck direkt aus einem angeschlossenen Versorgungsdruck aussteuern kann. Somit erfolgt der Brems-Steuerbetrieb und entsprechend auch die hilfsweise Bremsschlupfregelung über ein derartiges Bypass-Ventil.

An der Hinterachse kann eine Bremsschlupfregelung vorzugsweise über ein Hinterachs-Bremsmodul erfolgen, das entsprechend die ABS-Phasen des Druckerhöhens, Druckhaltens und Druckablassens direkt in den angeschlossenen pneumatischen Bremsleitungen zu den Radbremsen einsteuert. Hier kann die hilfsweise Bremssteuerung über ein hinteres Bypass-Ventil erfolgen, das elektrisch von der zweiten Brems-Steuereinrichtung angesteuert wird und z. B. wiederum einen analogen Bremsdruckwert direkt aus dem angeschlossenen Versorgungsdruck aussteuert. Der analoge Bremsdruckwert kann an das Hinterachs-Bremsmodul ausgegeben werden, das im Fehlerfall diesen analogen Bremsdruckwert an die hinteren Radbremsen durchsteuert. Somit kann auch hier wiederum eine hilfsweise bzw. rudimentäre Bremsschlupfregelung direkt durch Aussteuerung des entsprechenden analogen Bremsdruckwerts erfolgen.

Bei der vorteilhaften Ausbildung der zweiten Brems-Steuereinrichtung als Parkbrems-Steuereinrichtung kann ein derartiges hinteres Bypass-Ventil entfallen, da die Feststellbrems-Steuereinrichtung direkt die pneumatischen Feststellbrems-Zylinder ansteuert und somit einen inversen Bremsbetrieb vornehmen kann, der somit die Betriebsbremsfunktion und die Bremsschlupfregelfunktion ermöglicht.

Entsprechend können sowohl Bremsschlupfregelungen für den ABS-Fall als auch Raddrehzahlregelungen für eine Fahrdynamikregelung vorgenommen werden, um Instabilitäten durch asymmetrisches Ansteuern der Radbremsen zu ermöglichen.

Die direkte Datenverbindung zwischen den beiden Steuereinrichtungen kann insbesondere eine Busleitung sein, die insbesondere separat von weiteren Steuereinrichtungen direkt zur Verbindung nur dieser beiden Steuereinrichtungen vorgesehen ist.

Die Raddrehzahlsensoren können aktiv oder passiv sein, ohne dass hier funktionelle Einschränkungen vorliegen.

Die Erfindung wird im Folgenden anhand der beiliegenden Zeichnungen an einigen Ausführungsformen näher erläutert. Es zeigen:
- Fig. 1: ein elektropneumatisches Blockschaltbild eines pneumatischen Bremssystems eines Nutzfahrzeuges gemäß einer ersten Ausführungsform mit kreuzweiser Unterteilung der Raddrehzahlsensoren;
- Fig. 2: ein elektropneumatisches Blockschaltbild eines pneumatischen Bremssystems gemäß einer weiteren Ausführungsform, bei der gegenüber Fig. 1 in der weiteren Steuereinrichtung die Steuerung der elektronischen Parkbremse kombiniert ist;
- Fig. 3: das elektropneumatische Blockschaltbild eines pneumatischen Bremssystems gemäß einer weiteren Ausführungsform mit asymmetrischer Unterteilung der Raddrehzahlsensoren;
- Fig. 4: ein elektropneumatisches Blockschaltbild eines Bremssystems gemäß einer weiteren Ausführungsform mit achsweiser Unterteilung der Raddrehzahlsensoren.

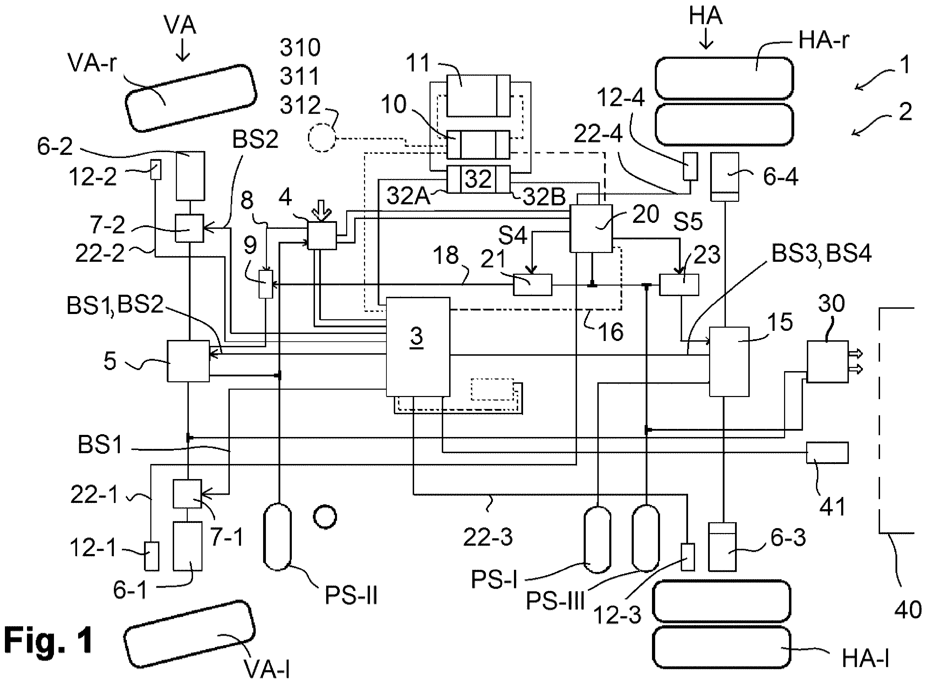

Ein Nutzfahrzeug 1 weist gemäß Fig. 1 ein elektropneumatisches Bremssystem 2 auf. Weiterhin weist das Nutzfahrzeug 1 eine Vorderachse VA mit einem linken Vorderrad VA-I und einem rechten Vorderrad VA-r, sowie entsprechend eine Hinterachse HA mit einem linken Hinterrad HA-I und einem rechten Hinterrad HA-r auf, wobei hier z.B. in üblicher Weise Zwillingsreifen an der Hinterachse HA eingesetzt werden können.

Das elektropneumatische Bremssystem 2 weist eine zentrale elektronische Brems-Steuereinrichtung 3 (ECU-EBS), ein Bremspedal 4 zur Bedienung durch den Fahrer, ein Vorderachs-Bremsmodul 5 zur Ansteuerung eines linken vorderen Bremszylinders 6-1 über ein erstes ABS-Sperrventil 7-1 (ABS-Solenoidventil) und entsprechend zur Ansteuerung eines vorderen rechten Bremszylinders 6-2 über ein vorderes rechtes ABS-Sperrventil 7-2 auf; weiterhin weist das elektropneumatische Bremssystem 2 entsprechend ein Hinterachs-Bremsmodul 15 zur Steuerung eines hinteren linken Bremszylinders 6-3 und eines hinteren rechten Bremszylinders 6-4 auf.

Die detailliertere Ausbildung der Bremsmodule 5, 15 und Bremszylinder 6-i, d. h. 6-1, 6-2, 6-3 und 6-4, kann unterschiedlich erfolgen. Gemäß der gezeigten Ausführungsform kann das elektropneumatische Bremssystem 2 hier als EBS-Bremssystem bzw. elektronisches Bremssystem ausgebildet sein, das somit eine direkte Bremsdruckaussteuerung an den Achsen VA, HA zulässt. Gemäß der gezeigten Ausführungsform kann das Vorderachs-Bremsmodul 5 insbesondere ein Proportional-Regelventil aufweisen und Druckluft aus einem zweiten Druckluft-Kreis oder zweiten Druckluft-Vorrat PS2 aufnehmen und über die ABS-Solenoidventile 7-1, 7-2 an die beiden vorderen Bremszylinder 6-1, 6-2 aussteuern. Hierbei ist gemäß der gezeigten Ausführungsform z.B. eine pneumatische Rückfallebene vorgesehen durch eine pneumatische Verbindung 8 zwischen dem Bremspedal 4 und dem Vorderachs- Bremsmodul 5, die hier zusätzlich ein Select-High-Ventil 9 aufweist, auf das später eingegangen wird.

Die zentrale elektronische Brems-Steuereinrichtung 3 nimmt ein Fahrer-Bremssignal S1, und weiterhin ggf. Brems-Anforderungssignale S2 von weiteren Steuerungen bzw. Steuereinrichtungen des Nutzfahrzeugs 1 auf, z.B. einer Autonomous-Driving-ECU 11 über einen fahrzeuginternen ersten Datenbus, insbesondere CAN-Bus 10.

Weiterhin kann z.B. eine Fahrdynamikregelung oder Stabilitätsregelung in der elektronischen zentralen Brems-Steuereinrichtung 3 selbst vorgesehen sein, oder als externes Bremsanforderungssignal S2 an die zentrale Brems-Steuereinrichtung 3 übertragen bzw. angefordert werden.

An der Hinterachse HA kann das Hinterachs-Bremsmodul 15 z.B. wie gezeigt die ABS-Steuerung mitregeln. Weiterhin können die hinteren Bremszylinder 6-3, 6-4 auch die Parkbremsfunktion mit realisieren, d. h. z.B. eine zusätzliche Druckkammer zum Lösen einer federvorgespannten Radbremse aufweisen.

Hierbei sind auch andere Auslegungen der ABS-Sperrventile und Bremsmodule an der Hinterachse HA und Vorderachse VA möglich.

Weiterhin ist bei der hier gezeigten Ausbildung direkt keine pneumatische Rückfallebene für die Hinterachse HA vorgesehen; auch dies kann jedoch entsprechend vorgesehen sein.

An den Fahrzeugrädern VA-I, VA-r, HA-I, HA-r ist jeweils ein Raddrehzahlsensor 12-i, i= 1 bis 4, vorgesehen, d. h. ein vorderer linker Raddrehzahlsensor 12-1 an dem linken Vorderrad VA-I, entsprechend ein vorderer rechter Raddrehzahlsensor 12-2 an dem rechten Vorderrad VA-r, und entsprechende hintere Raddrehzahlsensoren 12-3, 12-4 an den Hinterrädern HA-I, HA-r. Die Raddrehzahlsensoren 12-i können passiv sein, d. h. bei Bewegung der Fahrzeugräder Signale liefern oder auch aktiv, d. h. insbesondere auch eine aktive Messung durchführen und z. B. digitale Signale liefern.

Hierbei sind die Raddrehsensoren 12-i in zwei Gruppen 14A und 14B aufgeteilt, wobei diese Aufteilung wie nachfolgend erläutert in den verschiedenen Ausführungsformen unterschiedlich erfolgt. Die erste Gruppe 14A wird bei der Ausführungsform nach Fig. 1 durch den vorderen linken Raddrehzahlsensor 12-1 und den hinteren rechten Raddrehzahlsensor 12-4 gebildet und sendet die Raddrehzahlsignale S12-1, S12-3 an eine zweite Brems-Steuereinrichtung (FOBS-ECU) 20. Die zweite Raddrehzahl-Gruppe 14B wird entsprechend durch den vorderen rechten Raddrehzahlsensor 12-2 und den hinteren linken Raddrehzahlsensor 12-3 gebildet, wobei diese Ihre Raddrehzahl-Signale S12-2 und S12-3 an die zentrale Brems-Steuereinrichtung (erste Brems-Steuereinrichtung) 3 senden. Hierbei sind aus Sicherheitsgründen im Allgemeinen direkte Signalleitungen 22-1, 22-2, 22-3, 22-4 zwischen den Raddrehzahlsensoren 12-i und den Steuereinrichtungen 3, 20 gelegt.

Bei der Ausführungsform der Fig. 1 erfolgt somit eine kreuzweise Auslegung der Gruppen 14A, 14B der Raddrehzahlsensoren 12-i.

Die beiden Brems-Steuereinrichtungen 3, 20 sind über eine direkte Datenverbindung 16, z. B. einen direkten Datenbus oder eine serielle Datenleitung, verbunden. Vorteilhafterweise ist diese direkte Datenleitung 16 von dem zentralen Fahrzeugbus bzw. CAN-Bus 10 verschieden.

Somit erfasst die zentrale Brems-Steuereinrichtung 3 zunächst die Raddrehzahlsignale S12-2, S12-3; weiterhin erfasst die zweite Brems- Steuereinrichtung 20 die Raddrehzahlsignale S12-1, S12-4 und sendet diese nachfolgend über die direkte Datenleitung 16 an die zentrale Brems-Steuereinrichtung 3.

Gemäß Fig. 1 geht von der zweiten Brems-Steuereinrichtung 20 eine pneumatische Brems-Hilfsleitung 18 (pneumatische Brems-Hilfssteuerleitung 18) aus, mit der die zweite Brems-Steuereinrichtung 20 bei einem Ausfall der zentralen Brems-Steuereinrichtung 3 eine Hilfs-Bremssteuerung an beiden Achsen VA und HA vornehmen kann. Somit geht die erste Brems- Hilfssteuerleitung oder Vorderachs-Brems-Hilfssteuerleitung 18 zu dem Vorderachs-Bremsmodulator 5, insbesondere über das Select-High-Ventil 9, das somit den höheren der angesteuerten Bremsdrücke von einerseits dem Bremspedal 4 über die pneumatische Brems-Hilfssteuerleitung 8 und andererseits der Vorderachs-Brems-Hilfssteuerleitung 18 durchleiten kann. Hierzu ist vorteilhafterweise ein vorderes Bypass-Ventil 21 zwischen die zweite Brems-Steuerleitung 20 und das Select-High-Ventil 9 geschaltet, das entsprechend über ein elektrisches Hilfs-Bremssteuersignal S4 von der zweiten Brems-Steuereinrichtung 20 angesteuert werden kann. Entsprechend ist in dieser Ausführungsform ein hinteres Bypass-Ventil 23 für die Hinterachs- Hilfssteuerung zur entsprechenden Ansteuerung des Hinterachs-Bremsmodulators 15 vorgesehen, das über ein elektrisches Hilfs-Bremssteuersignal S5 angesteuert wird, wobei hier die Bypass-Ventile 21, 23 zur pneumatischen Hilfssteuerung als pneumatische Rückfallebene an einen dritten Vorratsspeicher PS-III angeschlossen sind.

In üblicher Weise ist hier ein Trailer-Control-Modul oder Anhänger-Steuermodul 30 an den dritten Versorgungskreis III angeschlossen. Ein elektrischer Anschluss des hier angedeuteten Anhängers 40 kann über eine Anhänger-Steuerleitung 41, d. h. eine entsprechende Datenverbindung nach ISO 11992 von der zentralen Brems-Steuereinrichtung 3 erfolgen.

Somit ist bei dem Bremssystem 2 der Ausführungsform der Fig. 1 eine zentrale Bremssteuerung über Bremssteuersignale BS1, BS2, BS3, BS4 vorgesehen, die von der Brems-Steuereinrichtung 3 an die Achs-Bremsmodule 5,15 und/oder die ABS-Sperrventile 7-2, 7-1 ausgegeben werden. Eine elektrische Ansteuerung durch die zweite Brems-Steuereinrichtung 20 ist somit im Normalfall nicht vorgesehen; die zweite Brems-Steuereinrichtung 20 liest nur routinemäßig die beiden Raddrehzahlsensoren 12-1 und 12-4 aus und gibt die ermittelten Raddrehzahlen als Raddrehsignale S12-1, S12-4 an die zentrale Brems-Steuereinrichtung 3 aus.

Somit dient im Normalbetrieb die zweite Brems-Steuereinrichtung 20 lediglich zum Auslesen einer der beiden Raddrehzahlsensor-Gruppen, hier der ersten Gruppe 14A, und der Kommunikation mit der (ersten) zentralen Brems-Steuereinrichtung 3; im Falle eines ganzen oder teilweisen Ausfalls der ersten Brems-Steuereinrichtung 3 erfolgt ein Ersatz-Steuerbetrieb bzw. Hilfs-Steuerbetrieb oder redundanter Steuerbetrieb dieses elektropneumatischen Bremssystems 2 bzw. der Bremszylinder 6-1, 6-2, 6-3, 6-4 durch die zweite Brems-Steuereinrichtung 20.

Die Spannungsversorgung der beiden Brems-Steuereinrichtungen 3 und 20 erfolgt getrennt: Eine Spannungsversorgungs-Einrichtung 32 weist zwei getrennte Spannungsversorgungen 32A und 32B auf, die z. B. jeweils eine Versorgungsspannung U1 bzw. U2 von 24 V zur Verfügung stellen, alternativ können auch Versorgungsspannungen U1, U2 von 12 V zur Verfügung gestellt werden. Hierbei sind vorteilhafterweise getrennte Batterien im Nutzfahrzeug 1 vorgesehen. Fällt somit z. B. die erste Spannungsversorgung 32A aus, so ist weiterhin die zweite Spannungsversorgung 32B vorhanden, die die zweite Brems-Steuereinrichtung 20 mit Spannung bzw. Strom versorgt, um somit den redundanten Hilfs-Bremssteuerbetrieb aufrechtzuerhalten.

Das elektropneumatische Bremssystem 2 ermöglicht nicht nur einen redundanten Brems-Steuerbetrieb, sondern auch eine redundante Bremsschlupf-Steuerung. Fallen z. B. die Raddrehzahlsignale S12-1, S12-3 aus, da z. B. die zweite Brems-Steuereinrichtung 20 defekt oder aufgrund fehlender Spannungsversorgung nicht betriebsbereit ist, so kann die erste, zentrale Brems-Steuereinrichtung 3 die fehlenden Raddrehzahlen abschätzen; insbesondere kann zunächst bei dieser kreuzweisen Anordnung angesetzt werden, dass die Raddrehzahlen an jeder Achse VA, HA links und rechts gleich sind, um eine hilfsweise bzw. rudimentäre Fehlerfall-Bremsschlupfregelung (fail operation braking system, FOBS) zu realisieren. Dies ist insbesondere für eine ABS-Schlupfregelung möglich.

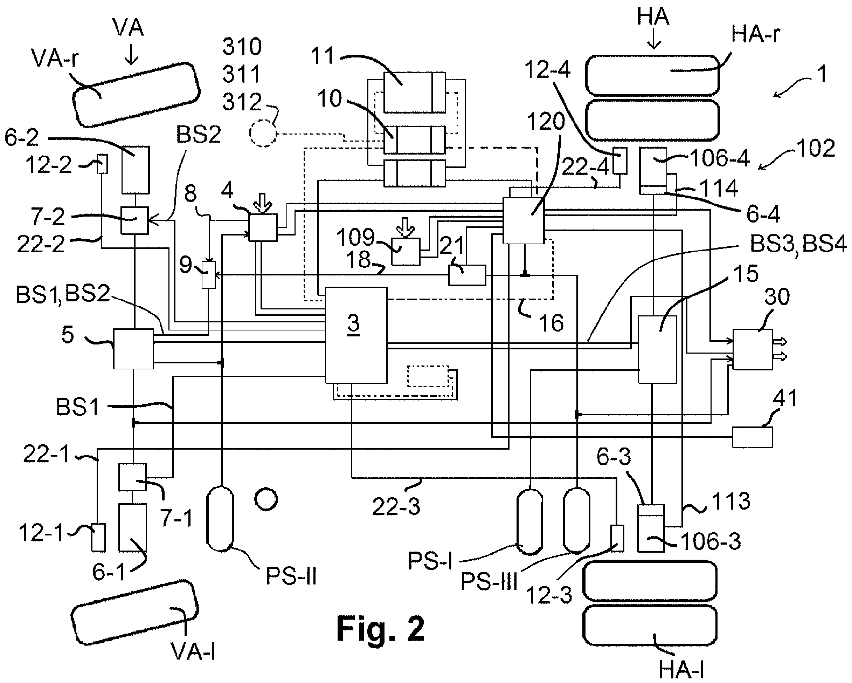

Fig. 2 zeigt als zweite Ausführungsform ein elektropneumatisches Bremssystem 102, in dem eine elektronische Feststell-Bremssteuereinrichtung 120 als zweite elektrische Bremssteuereinrichtung dient, d. h. entsprechend der zweiten elektrischen Bremssteuereinrichtung 20 der ersten Ausführungsform der Fig. 1. Der Aufbau und die Funktionalität der zentralen Brems- Steuereinrichtung 3 sowie der Bremszylinder 6-i, i = 1, 2, 3, 4, der Raddrehzahlsensoren 12-i sowie der ABS-Sperrventile 7-1, 7-2, des Select-High-Ventils 9, des Bremspedals 4 und auch der weiteren Leitungen, einschließlich der Druckluftvorräte und auch des Anhänger-Steuerventils 30 und des Hinterachs-Bremsmodulators 15 bleibt unverändert. Die Feststellbrems- Steuereinrichtung 120 ist somit ebenfalls über die direkte Datenleitung 16 mit der zentralen Brems-Steuereinrichtung 3 verbunden.

Gemäß Fig. 2 ist weiterhin ein Feststellbrems-Betätigungsmittel 109 zur Betätigung durch den Fahrer, d. h. z. B. als Feststellbrems-Pedal, vorgesehen, das entsprechend elektrisch von der elektrischen Feststellbrems- Steuereinrichtung 120 ausgelesen wird.

Weiterhin entfällt das hintere Bypass-Ventil 23 zwischen der Feststellbrems-Steuereinrichtung 120 und dem Hinterachs-Bremsmodulator 15, da die Feststellbrems-Steuereinrichtung 120 über pneumatische Feststellbrems-Steuerleitungen 113, 114 die als Tristop-Zylinder 116 ausgelegten hinteren Bremszylinder 6-3, 6-4 ansteuert. Somit lässt sich der redundante Brems-Steuerbetrieb bzw. Betriebsbremsbetrieb im Fehlerfall der zentralen Brems-Steuereinrichtung 3 durch pneumatische Steuersignale der Feststellbrems-Steuereinrichtung 120 über die pneumatischen Feststellbrems- Steuerleitungen 113, 114 aufrecht erhalten; dieser pneumatische Hilfs-Betrieb sieht somit eine Invertierung der pneumatischen Signale an die Federkammern bzw. Feststellbremszylinder 106-3, 106-4 der als Tristop-Zylinder 116 ausgebildeten hinteren Bremszylinder 6-3, 6-4 vor, so dass zum Einlegen der Betriebsbremse bzw. der Betriebsbremsfunktion die Feststell- Bremskammern entlüftet werden und zum Lösen der Betriebsbremsfunktion die Feststell-Bremskammern mit Druck beaufschlagt werden.

Somit ermöglicht die zweite Ausführungsform mit dem pneumatischen Bremssystem 102 gemäß Fig. 2 - entsprechend Ausführungsform der Fig. 1 - insbesondere die kreuzweise Auslesung der Raddrehzahl-Sensoren 12-i und einen hilfsweisen Brems-Steuerbetrieb sowie auch hilfsweisen BremsSchlupfregelbetrieb (FOBS), und weiterhin den synergistischen Vorteil der Verwendung der Feststellbrems-Steuereinrichtung als zweite Brems-Steuereinrichtung, so dass hier keine zusätzliche zweite Brems- Steuereinrichtung erforderlich ist; weiterhin wird für den redundanten Betriebsbremsbetrieb an der Hinterachse HA kein zusätzliches Bypass-Ventil benötigt.

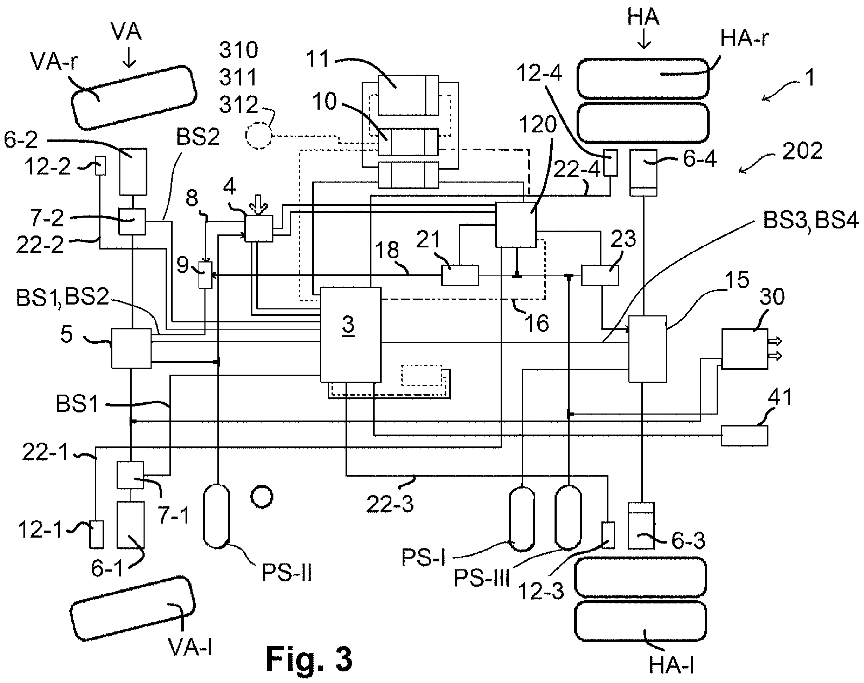

Die Ausführungsform der Fig. 3 zeigt ein elektropneumatisches Bremssystem 202, bei dem die Raddrehzahlsensoren 12-i nicht kreuzweise, sondern asymmetrisch unterteilt sind. Hierbei bilden die beiden Hinterachs- Raddrehzahlsensoren 12-3, 12-4 und einer der beiden vorderen Raddrehzahlsensoren, hier der rechte vordere Raddrehzahlsensor 12-2, die erste Raddrehzahlsensor-Gruppe 214A, und entsprechend der weitere vordere Raddrehzahlsensor, hier somit der linke vordere Raddrehzahlsensor 12-1, die zweite Raddrehzahlsensor-Gruppe 214B.

Auch hier kann somit die zweite Brems-Steuereinrichtung 20 - entsprechend der ersten Ausführungsform der Fig. 1 - bei Ausfall der zentralen Brems-Steuereinrichtung 3 bzw. deren erster Spannungsversorgung V1 den hilfsweisen Betriebsbremsbetrieb übernehmen, wiederum durch pneumatische Ansteuerung der Vorderachse VA über das Select-High-Ventil 9 an den Vorderachs-Bremsmodulator 5, und entsprechend über das hintere Bypass-Ventil 23 pneumatisch an den Hinterachs-Bremsmodulator 15. Falls diese Ausführungsform mit der Ausführungsform der Fig. 2 kombiniert ist, kann entsprechend die zweite Brems-Steuereinrichtung 20 wiederum ohne hinteres Bypass-Ventil 23 direkt die Feststell-Bremszylinder 106-3, 106-4 der als Tristop- Zylinder 116 ausgebildeten hinteren Bremszylinder 6-3, 6-4 pneumatisch ansteuern.

Weiterhin ist auch bei dieser Ausführungsform der Fig. 3 ein Fail-Operation-Schlupfregelbetrieb möglich, wobei insbesondere die Raddrehzahlen der hinteren Fahrzeugräder HA-I und HA-r, die beim Nutzfahrzeug im Allgemeinen angetrieben sind, über Getriebeausgangswellen-Drehzahlsignale S40 abgeschätzt werden können, die die zweite Brems-Steuereinrichtung 20 z. B. über den fahrzeuginternen Datenbus bzw. CAN-Bus 10 von z. B. einer Getriebe-Steuereinrichtung aufnehmen kann. Somit können die Drehzahlen der Hinterräder HA-I und HA-r abgeschätzt werden. Da die zweite Brems- Steuereinrichtung 20 direkt die Raddrehzahlsignale S20-1 des linken Vorderrades VA-I (oder alternativ hierzu des rechten Vorderrades VA-r) aufnimmt, kann sie wiederum in dem Fail-Operation-Schlupfregelbetrieb die Drehzahl der jeweils anderen Seite abschätzen, indem sie die Drehzahl an der Vorderachse VA als gleich ansetzt.

Wie bereits ausgeführt können die Ausführungsformen der Fig. 2 und 3 entsprechend kombiniert werden, so dass in Fig. 3 statt der zweiten Brems-Steuereinrichtung 20 entsprechend die Feststell-Bremssteuereinrichtung 120 der Fig., 2 eingesetzt wird.

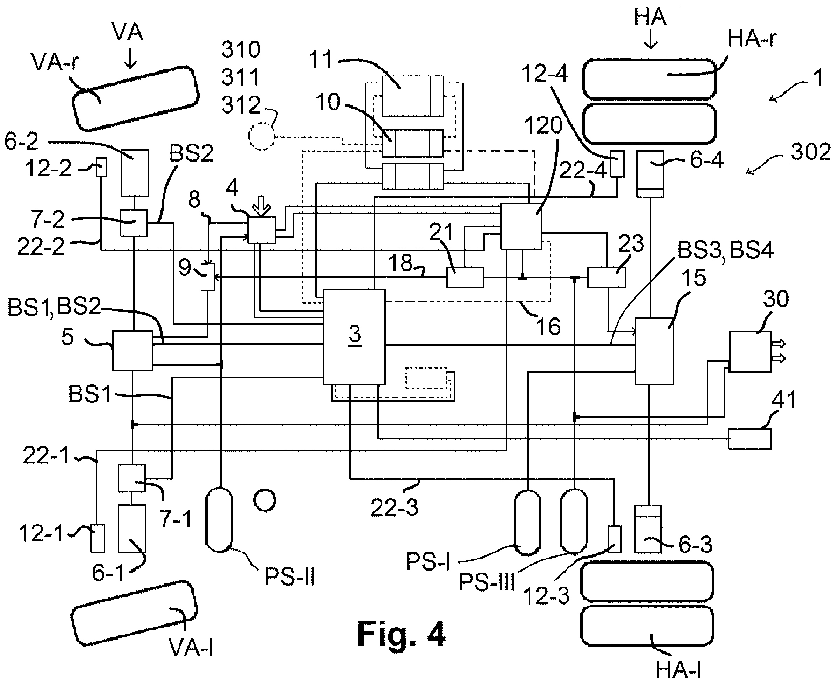

Die vierte Ausführungsform der Fig. 4 zeigt ein elektropneumatisches Bremssystem 302, bei dem eine achsweise Zuordnung der Raddrehzahlsensor-Gruppen 314A, 314B erfolgt: Die erste Raddrehzahlsensor-Gruppe 314A weist die vorderen Raddrehzahlsensoren, d. h. den linken vorderen Raddrehzahlsensor 12-1 und den rechten vorderen Raddrehzahlsensor 12-2 auf, die somit von der zweiten Brems-Steuereinrichtung 20 ausgelesen werden. Die zweite Raddrehzahlsensor-Gruppe 314B weist die beiden hinteren Raddrehzahlsensoren, d. h. den hinteren linken Raddrehzahlsensor 12-3 und den hinteren rechten Raddrehzahlsensor 12-4 auf, die somit von der zentralen Brems-Steuereinrichtung 3 ausgelesen werden.

In einem Fail-Operation-Schlupfregelbetrieb können grundsätzlich wiederum die nicht vorliegenden Raddrehzahlen der Hinterachse HA über die Getriebeausgangswellen-Drehzahlsignale S40, entsprechend der Ausführungsform der Fig. 3 abgeschätzt werden, so dass die zweite Brems-Steuereinrichtung 20 ein pneumatisch gesteuerten Betriebsbremsbetrieb und den ergänzenden Schlupfregelbetrieb durchführen kann, wobei hier beide Raddrehzahlsignale S12-1, S12-2 der Vorderachse VA zur Verfügung stehen.

### Bezugszeichenliste (Teil der Beschreibung)

1 Nutzfahrzeug
2, 102, 202, 302 elektropneumatisches Bremssystem
3 zentrale elektronische Brems-Steuereinrichtung
4 Bremspedal, insbesondere mit pneumatischem und elektrischem Ausgang
5 Vorderachs-Bremsmodul
6-i Bremszylinder
6-1 vorderer linker Bremszylinder
6-2 vorderer rechter Bremszylinder
6-3 hinterer linker Bremszylinder, insbesondere als Tristop-Bremszylinder mit kombinierter Feststellbrems-Funktion durch zwei Bremskammern, eine pneumatische Betriebsbremskammer und eine pneumatische Feststellbremskammer, die gegen eine Federvorspannung der Feststellbremse wirkt
6-4 hinterer rechter Bremszylinder, insbesondere als Tristop-Bremszylinder mit kombinierter Feststellbrems-Funktion durch zwei Bremskammern, eine pneumatische Betriebsbremskammer und eine pneumatische Feststellbremskammer, die gegen eine Federvorspannung der Feststellbremse wirkt
7-1, 7-2 ABS-Sperrventile, insbesondere an der Vorderachse VA
8 pneumatische Hilfs-Bremssteuerleitung für pneumatischen Bremsbetrieb an der Vorderachse VA
9 Select-High-Ventil
10 fahrzeuginterner Datenbus, insbesondere CAN-Bus
11 externes Steuergerät für autonomes Fahren, autonomous-driving-ECU
12-i Raddrehzahlsensoren
12-1 vorderer linker Raddrehzahlsensor
12-2 vorderer rechter Raddrehzahlsensor
12-3 hinterer linker Raddrehzahlsensor
12-4 hinterer rechter Raddrehzahlsensor
14A, 214A, 314A erste Raddrehzahlsensor-Gruppe
14B, 214B, 314B zweite Raddrehzahlsensor-Gruppe
15 Hinterachs-Bremsmodul, z. B. mit zwei Relais-Ventilen
16 direkte Datenverbindung, z.B. Busverbindung zwischen den Brems-Steuereinrichtungen 3, 20
18 pneumatische Brems-Hilfssteuerleitung für den pneumatischen Hilfs-Bremssteuerbetrieb durch die zweite Brems-Steuereinrichtung 20, 120 an der Vorderachse VA
20 zweite Brems-Steuereinrichtung, Hilfs-Bremssteuereinrichtung, für den Hilfs-Bremssteuerbetrieb
21 vorderes Bypass-Ventil 21 zwischen der zweiten Brems-Steuerleitung 20 und dem Select-High-Ventil 9
22-1, 22-2, 22-3, 22-4 direkte Signalleitungen zwischen den Raddrehzahlsensoren 12-i und den Steuereinrichtungen 3, 20
23 hinteres Bypass-Ventil für die Hinterachs-Hilfssteuerung zur pneumatischen Ansteuerung des Hinterachs-Bremsmodulators 15
30 Anhänger-Steuermodul, TCM
32 Spannungsversorgungs-Einrichtung
32A erste Spannungsversorgung
32B zweite Spannungsversorgung
40 Anhänger
41 Anhänger-Steuerleitung, insbesondere Datenverbindung nach ISO 11992
100 Betriebsbremsbetrieb
100a Hilfs-Betriebsbremsbetrieb
105 redundanter Hilfs-Bremsbetrieb
105-1 pneumatische Redundanzansteuerung der Vorderachse
105-2 pneumatische Redundanzansteuerung der Hinterachse
106-3, 106-4 Feststellbrems-Zylinder, Federkammern der Tristop-Zylinder
100a Hilfs-Betriebsbremsbetrieb der Feststellbrems-Steuereinrichtung 120
116 Tristop-Zylinder
109 Feststellbrems-Betätigungsmittel, z. B. Feststellbrems-Pedal
113, 114 pneumatische Feststellbrems-Steuerleitung
120 Feststell-Bremssteuereinrichtung
310 elektronischen Stabilitätssystem (fahrzeuginternes System, über fahrzeuginternen Datenbus 10 verbunden)
311 Abstand-Regelsystem (fahrzeuginternes System, über fahrzeuginternen Datenbus 10 verbunden)
312 Notbremssystem (fahrzeuginternes System, über fahrzeuginternen Datenbus 10 verbunden)
HA Hinterachse
HA-I linke Hinterrad
HA-r rechte Hinterrad
n1, n2, n3, n4 Raddrehzahlen
S1 Fahrer-Bremssignal
S2 externe Bremsanforderungs-Signal
S4 elektrisches Hilfs-Bremssteuersignal von der zweiten Brems-Steuereinrichtung 20 an das vordere Bypass-Ventil 21 zwischen der zweiten Brems-Steuerleitung 20 und dem Select-High-Ventil 9
S5 elektrisches Hilfs-Bremssteuersignal von der zweiten Brems-Steuereinrichtung 20 an das hintere Bypass-Ventil 23
BS1, BS2, BS3, BS4 Bremssteuersignale
S12-i Raddrehzahl-Signale, des Raddrehzahlsensors 12-i
S40 Getriebeausgangswellen-Drehzahlsignal
VA Vorderachse
VA-I linke Vorderrad
VA-r rechte Vorderrad
U1, U2 erste Spannungsversorgung, zweite Spannungsversorgung, z.B. zwei Batterien
PS-I, PS-II, PS, III erster, zweiter dritter pneumatischer Versorgungskreis, Vorratsspeicher
ABS Bremsschlupfregelung, insbesondere ABS-Bremsschlupfregelung
H_ABS hilfsweise Bremsschlupfregelung
SR Stabilitätsregelung und/oder Fahrdynamikregelung
SR2 selektive, z.B. rechts und links unsymmetrische Bremsansteuerung
p_6_1 analoger Drucksteuerwert an Bremszylinder 6-1
p_6_2 analoger Drucksteuerwert an Bremszylinder 6-2

## Patentansprüche

1. Elektropneumatisches Bremssystem (2, 102, 202, 302) für ein Nutzfahrzeug (1), wobei das Bremssystem (2, 102, 202, 302) mindestens aufweist:
einen vorderen ersten Bremszylinder (6-1) und vorderen zweiten Bremszylinder (6-2) an einer Vorderachse (VA),
einen hinteren dritten Bremszylinder (6-3) und hinteren vierten Bremszylinder (6-4) an einer Hinterachse (HA),
eine zentrale Brems-Steuereinrichtung (3) zur Ausgabe von Bremssteuersignalen (BS1, BS2, BS3, BS4) zur pneumatischen Druckbeaufschlagung der Bremszylinder (6-i, i = 1, 2, 3, 4),
wobei die Bremszylinder (6-i) zur Abbremsung von Fahrzeugrädern (VL, VR, HL, HR) vorgesehen sind,
wobei zwei vordere Raddrehzahlsensoren (12-1, 12-2) und zwei hintere Raddrehzahlsensoren (12-3, 12-4) zur Sensierung von Raddrehzahlen (n1, n2, n3, n4) der Fahrzeugräder (VL, VR, HL, HR) und Ausgabe von Raddrehzahl-Signalen (S12-i, i = 1, 2, 3, 4) vorgesehen sind,
eine zweite Brems-Steuereinrichtung (20, 120) zur Ansteuerung der Bremszylinder (6-i) bei Ausfall der zentralen Brems-Steuereinrichtung (3) als hilfsweisen, zumindest teilweise elektrischen Hilfsbremsbetrieb,
wobei die vier Raddrehzahlsensoren (S12-i, i = 1, 2, 3, 4) in eine erste Raddrehzahlsensor-Gruppe (14A, 214A, 314A) und eine zweite Raddrehzahlsensor-Gruppe (14B, 214B, 314B) aufgeteilt sind, wobei die erste Raddrehzahlsensor-Gruppe (14A, 214A, 314A) ihre Raddrehzahlsensor-Signale (S12-i) an die zweite Brems-Steuereinrichtung (20, 120) ausgibt, die die Raddrehzahlsensor-Signale (S12-i) an die zentrale Brems-Steuereinrichtung (3) weitergibt, und
die zweite Raddrehzahlsensor-Gruppe (14B, 214B, 314B) ihre Raddrehzahlsensor-Signale (S12-i) an die zentrale Brems-Steuereinrichtung (3) ausgibt, und
die zentrale Brems-Steuereinrichtung (3) ausgebildet ist, eine Schlupfregelung (ABS) der Fahrzeugräder (VL, VR, HL, HR) elektrisch auszusteuern, und bei einem Ausfall der zentralen Brems-Steuereinrichtung (3) die zweite Brems-Steuereinrichtung (20, 120) ausgebildet ist, mit den Raddrehzahlsensor-Signalen (S12-i) der ersten Raddrehzahlsensor-Gruppe (14A, 114A, 214A, 314A) eine hilfsweise Bremsschlupfregelung (H_ABS) der Bremszylinder (6-i, i = 1, 2, 3, 4) auszusteuern,
wobei die zweite Brems-Steuereinrichtung (20, 120) ein vorderes elektromagnetisches Bypass-Ventil (21) zur pneumatischen Redundanzansteuerung (105-1) der vorderen Radbremsen (6-1, 6-2) und/oder ein hinteres elektromagnetisches Bypass-Ventil (23) zur pneumatischen Redundanzansteuerung (105-2) der hinteren Radbremsen (6-3, 6-4) aufweist, für den redundanten Hilfs-Bremsbetrieb (105) bei Ausfall der zentralen Brems-Steuereinrichtung (3).

2. Bremssystem (2, 102, 202, 302) nach Anspruch 1, **dadurch gekennzeichnet, dass** die zentrale Brems-Steuereinrichtung (3) eine erste Spannungsversorgung (U1) und die zweiten Brems-Steuereinrichtung (20) eine von der ersten Spannungsversorgung (U1) getrennte zweite Spannungsversorgung (U2) aufweist.

3. Bremssystem (2, 102, 202, 302) nach Anspruch 1 oder 2, **dadurch gekennzeichnet, dass** eine direkte Datenverbindung (16), z.B. ein Datenbus (16), zwischen den beiden Brems-Steuereinrichtungen (3, 20, 120) vorgesehen ist.

4. Bremssystem (2, 102, 202, 302) nach Anspruch 1, **dadurch gekennzeichnet, dass** die vorderen Bremszylinder (6-1, 6-2) über jeweils ein vorderes ABS-Sperrventil (7-1, 7-2) pneumatisch angesteuert sind, wobei die zentrale Brems-Steuereinrichtung (3) elektrische Brems-Steuersignale (BS1, BS2) an die vorderen ABS-Sperrventile (7-1, 7-2) ausgibt.

5. Bremssystem (2, 102, 202, 302) nach einem der Ansprüche 1 bis 3, **dadurch gekennzeichnet, dass** ein Vorderachs-Bremsmodulator (5) zur pneumatischen Ansteuerung der beiden vorderen Bremszylinder (6-1, 6-2) vorgesehen ist, der Bremssteuersignale (BS1, BS2) von der zentralen Brems-Steuereinrichtung (3) aufnimmt, vorzugsweise als Proportional-Relaisventil (5) zur Aussteuerung analoger Drucksteuerwerte (p_6_1, p_6_2_) aus einem angeschlossenen Vorratsspeicher (PSII).

6. Bremssystem (2, 102, 202, 302) nach einem der vorherigen Ansprüche, **dadurch gekennzeichnet, dass** ein Hinterachs-Bremsmodul (15) zur pneumatischen Ansteuerung der beiden hinteren Bremszylinder (6-3, 6-4) vorgesehen ist, insbesondere in Abhängigkeit elektrischer Brems-Steuersignale (BS3, BS4) der zentralen Brems-Steuereinrichtung (3).

7. Bremssystem (2, 102, 202, 302) nach einem der vorherigen Ansprüche, **dadurch gekennzeichnet, dass** die pneumatische Redundanzansteuerung (105-2) der hinteren Radbremsen (6-3, 6-4) über ein hinteres Radbremsmodul (15) erfolgt.

8. Bremssystem (2) nach einem der vorherigen Ansprüche, **dadurch gekennzeichnet, dass** die Raddrehzahlsensoren (12-i, i = 1, 2, 3, 4) kreuzweise in die Raddrehzahlsensor-Gruppen (14A, 14B) unterteilt sind, z.B. mit dem vorderen linken Raddrehzahlsensor (12-1) und dem hinteren rechten Raddrehzahlsensor (12-4) in der ersten Raddrehzahlsensor-Gruppe (14A) und dem vorderen rechten Raddrehzahlsensor (12-2) und dem hinteren linken Raddrehzahlsensor (12-3) in der zweiten Raddrehzahlsensor-Gruppe (14B).

9. Bremssystem (202) nach einem der Anspruch 1 bis 7, **dadurch gekennzeichnet, dass** eine der beiden Raddrehzahlsensor-Gruppen (214A, 214B) lediglich einen vorderen Raddrehzahlsensor (12-1, 12-2) aufweist und
die beiden hinteren Raddrehzahlsensoren (12-3, 12-4) und der andere vordere Raddrehzahlsensor (12-1, 12-2) in der anderen Raddrehzahlsensor-Gruppe, insbesondere der zweiten Raddrehzahlsensor-Gruppe (214B) aufgenommen sind,
wobei die Brems-Steuereinrichtungen (3, 20) ausgelegt sind, über ein fahrzeuginternes Datensystem (10) Getriebeausgangswellen- Drehzahlsignale (S40) aufzunehmen, zur Abschätzung der Raddrehzahlen (n3, n4) der Hinterräder (HA-I, HA-r).

10. Bremssystem (302) nach einem der Ansprüche 1 bis 7, **dadurch gekennzeichnet, dass** die beiden vorderen Raddrehzahlsensoren (12-1, 12-2) in einer Raddrehzahlsensor-Gruppe, z. B. der ersten Raddrehzahlsensor-Gruppe (314A) aufgenommen sind, und die beiden hinteren Raddrehzahlsensoren (12-2, 12-4) in der anderen Raddrehzahlsensor-Gruppe, z. B. der zweiten Raddrehzahlsensor-Gruppe (314B) aufgenommen sind, vorzugsweise unter Aufnahme von Getriebeausgangswellen-Drehzahlsignalen (S40) über ein Fahrzeug internes Datensystem (10) durch die Steuereinrichtung (3) der einen Raddrehzahlsensor-Gruppe (314A), zur Abschätzung der hinteren Raddrehzahlen (n3, n4).

11. Bremssystem (102) nach einem der vorherigen Ansprüche, **dadurch gekennzeichnet, dass** die zweite Brems-Steuereinrichtung (120) als Steuereinrichtung einer elektrischen Parkbremse (EPH) ausgebildet ist, zur direkten pneumatischen Ansteuerung von pneumatischen Feststell-Bremszylindern (106-3, 106-4) der als kombinierte BetriebsBremszylinder (6-3, 6-4) und Feststell-Bremszylinder (106-3, 106-4) ausgelegten hinteren Radbremsen (116), z.B. Tristop-Zylindern (116), wobei die Feststellbrems-Steuereinrichtung (120) ausgelegt ist, im Hilfs-Betriebsbremsbetrieb (100a) Betriebsbremsvorgänge und Bremsschlupfregelungen (ABS) an den hinteren Radbremsen (6-3, 6-4) durch pneumatische Ansteuerung der pneumatischen Feststell-Bremszylinder (106-3, 106-4) durchzuführen.

12. Bremssystem (2, 102, 202, 302) nach einem der vorherigen Ansprüche, **dadurch gekennzeichnet, dass** die zweite Brems-Steuereinrichtung (20, 120) ausgelegt ist, im Hilfs-Betriebsbremsbetrieb (100a) weiterhin eine Stabilitätsregelung (SR) durch selektive, z.B. rechts und links unsymmetrische Bremsansteuerung (SR2) der linken und rechten Radbremsen (6-1, 6-2, 6-3, 6-4) vorzunehmen.

13. Bremssystem (2, 102, 202, 302) nach einem der vorherigen Ansprüche, **dadurch gekennzeichnet, dass**
eine Betriebsbrems- Betätigungseinrichtung (4), z. B. ein Bremspedal (4), elektrische Fahrer-Bremssignale (S1) an die zentrale Brems-Steuereinrichtung (3) ausgibt,
das Bremssystem (2, 102, 202, 302) als elektronisches Bremssystem (EBS) ausgelegt ist, und die zentrale Brems-Steuereinrichtung (3) elektrische Brems-Steuersignale (BS1, BS2, BS3, BS4) an ein Vorderachs-Bremsmodul (5) und Hinterachs-Bremsmodul (15) ausgibt.

14. Bremssystem (2, 102, 202, 302) nach einem der vorherigen Ansprüche, **dadurch gekennzeichnet, dass** die zweite Brems-Steuereinrichtung (20, 120) als Anhänger-Bremssteuereinrichtung (120) ausgebildet ist zur Ansteuerung eines Anhänger-Steuermoduls (30) zur pneumatischen Versorgung eines anzuschließenden Anhängers (40).

15. Bremssystem (2, 102, 202, 302) nach einem der vorherigen Ansprüche, **dadurch gekennzeichnet, dass** die zentrale Brems-Steuereinrichtung (3) über ein fahrzeuginternes Datensystem (10) externe Bremsanforderungs-Signale (S2), z. B. von einem elektronischen Stabilitätssystem (310), Abstand-Regelsystem (311) und/oder Notbremssystem (312) aufnimmt und in Abhängigkeit der externen Bremsaufforderung-Signale (S2) Brems-Steuersignale (BS1, BS2, BS3, BS4) ausgibt.

16. Bremssystem (2, 102, 202, 302) nach einem der vorherigen Ansprüche, **dadurch gekennzeichnet, dass** bei elektrischem Ausfall der zweiten Brems-Steuereinrichtung (20, 120) die zentrale Brems-Steuereinrichtung (3) die Raddrehzahlen (n1, n2, n3, n4) der ersten Raddrehzahlsensor-Gruppe (14A) abschätzt, insbesondere aus einer Raddrehzahl (n1, n2, n3, n4) eines Raddrehzahlsensors (12-1, 121-2, 12-3, 12-4) der zweiten Raddrehzahlsensor-Gruppe (14B) dergleichen Achse (VA, HA) und/oder eine hintere Raddrehzahl (n3, n4) aus Getriebeausgangswellen-Drehsignalen (S40), die über einen Fahrzeugdatensystem (10) aufgenommen werden.

17. Verfahren zur Steuerung eines elektropneumatischen Bremssystems (2, 102, 202, 302) nach einem der vorherigen Ansprüche,
wobei bei einem Ausfall der zentralen Brems-Steuereinrichtung (3) die zweite Brems-Steuereinrichtung (20, 120) die Raddrehzahlen (n1, n2, n3, n4) der zweiten Raddrehzahlsensor-Gruppe (14B) abschätzt und einen Betriebsbremsbetrieb (100) durch Ansteuerung der vorderen und hinteren Radbremsen (6-i, i = 1, 2, 3, 4) und einen Bremsschlupfbetrieb (ABS) durch Bremsschlupfregelung der Radbremsen (6-i, i = 1, 2, 3, 4) durchführt.

18. Verfahren nach Anspruch 17, **dadurch gekennzeichnet, dass** bei Ausfall der zweiten Brems-Steuereinrichtung (20, 120) die zentrale Brems-Steuereinrichtung (3) die Raddrehzahlen (n1, n2, n3, n4) der Raddrehzahlsensoren (12-i) der ersten Raddrehzahlsensor-Gruppe (14A) abschätzt und eine Bremsschlupfregelung (ABS) der Radbremsen (6-i) der ersten Raddrehzahlsensor-Gruppe (14A) durchführt.

19. Fahrzeug (1), insbesondere Nutzfahrzeug (1) oder Fahrzeug-Anhänger (40), mit einem elektropneumatischen Bremssystem (2, 102, 202, 302) nach einem der Ansprüche 1 bis 16, insbesondere zur Durchführung eines Verfahrens nach einem der Ansprüche 17 bis 18.

## Claims

1. Electropneumatic brake system (2, 102, 202, 302) for a utility vehicle (1), wherein the brake system (2, 102, 202, 302) at least comprises:
a front first brake cylinder (6-1) and a front second brake cylinder (6-2) on a front axle (VA),
a rear third brake cylinder (6-3) and a rear fourth brake cylinder (6-4) on a rear axle (HA), a central brake control device (3) for outputting brake control signals (BS1, BS2, BS3, BS4) for pneumatic pressurization of the brake cylinders (6-i, i = 1, 2, 3, 4), wherein the brake cylinders (6-i) are provided for braking vehicle wheels (VL, VR, HL, HR),
wherein two front wheel speed sensors (12-1, 12-2) and two rear wheel speed sensors (12-3, 12-4) are provided for sensing wheel speeds (n1, n2, n3, n4) of the vehicle wheels (VL, VR, HL, HR) and outputting wheel speed signals (S12-i, i = 1, 2, 3, 4),
a second brake control device (20, 120) for actuating the brake cylinders (6-i) in the event of failure of the central brake control device (3) as an auxiliary, at least partially electrical auxiliary braking operation, wherein the four wheel speed sensors (S12-i, i = 1, 2, 3, 4) are divided into a first wheel speed sensor group (14A, 214A, 314A) and a second wheel speed sensor group (14B, 214B, 314B), wherein the first wheel speed sensor group (14A, 214A, 314A) outputs its wheel speed sensor signals (S12-i) to the second brake control device (20, 120), which transmits the wheel speed sensor signals (S12-i) to the central brake control device (3), and the second wheel speed sensor group (14B, 214B, 314B) outputs its wheel speed sensor signals (S12-i) to the central brake control device (3), and
the central brake control device (3) is designed to electrically control a slip control (ABS) of the vehicle wheels (VL, VR, HL, HR), and, in the event of a failure of the central brake control device (3), the second brake control device (20, 120) is designed to control an auxiliary brake slip control (H_ABS) of the brake cylinders (6-i, i = 1, 2, 3, 4) using the wheel speed sensor signals (S12-i) of the first wheel speed sensor group (14A, 114A, 214A, 314A),
wherein the second brake control device (20, 120) has a front electromagnetic bypass valve (21) for pneumatic redundancy actuation (105-1) of the front wheel brakes (6-1, 6-2) and/or a rear electromagnetic bypass valve (23) for pneumatic redundancy actuation (105-2) of the rear wheel brakes (6-3, 6-4) for redundant auxiliary braking operation (105) in the event of failure of the central brake control device (3).

2. Brake system (2, 102, 202, 302) according to claim 1,
**characterized in that** the central brake control device (3) has a first power supply (U1) and the second brake control device (20) has a second power supply (U2) which is separate from the first power supply (U1).

3. Brake system (2, 102, 202, 302) according to either claim 1 or claim 2, **characterized in that** a direct data connection (16), for example a data bus (16), is provided between the two brake control devices (3, 20, 120).

4. Brake system (2, 102, 202, 302) according to claim 1,
**characterized in that** the front brake cylinders (6-1, 6-2) are pneumatically actuated via a front ABS shut-off valve (7-1, 7-2) in each case, the central brake control device (3) outputting electrical brake control signals (BS1, BS2) to the front ABS shut-off valves (7-1, 7-2).

5. Brake system (2, 102, 202, 302) according to any of claims 1 to 3,
**characterized in that** a front-axle brake modulator (5) is provided for pneumatically actuating the two front brake cylinders (6-1, 6-2), which modulator receives brake control signals (BS1, BS2) from the central brake control device (3) and is preferably provided as a proportional relay valve (5) for controlling analog pressure control values (p_6_1, p_6_2_) from a connected supply reservoir (PSII).

6. Brake system (2, 102, 202, 302) according to any of the preceding claims, **characterized in that** a rear axle braking module (15) is provided for pneumatically controlling the two rear brake cylinders (6-3, 6-4), in particular on the basis of electrical brake control signals (BS3, BS4) of the central brake control device (3).

7. Brake system (2, 102, 202, 302) according to any of the preceding claims, **characterized in that** the pneumatic redundancy actuation (105-2) of the rear wheel brakes (6-3, 6-4) takes place via a rear wheel brake module (15).

8. Brake system (2) according to any of the preceding claims,
**characterized in that** the wheel speed sensors (12-i, i=1, 2, 3, 4) are divided crosswise into the wheel speed sensor groups (14A, 14B), for example with the front left-hand wheel speed sensor (12-1) and the rear right-hand wheel speed sensor (12-4) in the first wheel speed sensor group (14A), and the front right-hand wheel speed sensor (12-2) and the rear left-hand wheel speed sensor (12-3) in the second wheel speed sensor group (14B).

9. Brake system (202) according to any of claims 1 to 7, **characterized in that** one of the two wheel speed sensor groups (214A, 214B) only has a front wheel speed sensor (12-1, 12-2), and
the two rear wheel speed sensors (12-3, 12-4) and the other front wheel speed sensor (12-1, 12-2) are included in the other wheel speed sensor group, in particular the second wheel speed sensor group (214B), the brake control devices (3, 20) being designed to receive transmission output shaft speed signals (S40) via an in-vehicle data system (10), in order to estimate the wheel speeds (n3, n4) of the rear wheels (HA-l, HA-r).

10. Brake system (302) according to any of claims 1 to 7, **characterized in that** the two front wheel speed sensors (12-1, 12-2) are included in one wheel speed sensor group, for example the first wheel speed sensor group (314A), and the two rear wheel speed sensors (12-2, 12-4) are included in the other wheel speed sensor group, for example the second wheel speed sensor group (314B), preferably with the control device (3) of the one wheel speed sensor group (314A) receiving transmission output shaft speed signals (S40) via an in-vehicle data system (10) in order to estimate the rear wheel rotational speeds (n3, n4).

11. Brake system (102) according to any of the preceding claims, **characterized in that** the second brake control device (120) is designed as a control device of an electric parking brake (EPH), for direct pneumatic actuation of pneumatic parking brake cylinders (106-3, 106-4) of the rear wheel brakes (116), which are designed as combined service brake cylinders (6-3, 6-4) and parking brake cylinders (106-3, 106-4), for example tristop cylinders (116), the parking brake control device (120) being designed to carry out service braking processes and brake slip control (ABS) at the rear wheel brakes (6-3, 6-4) in the auxiliary service braking operation (100a) by means of pneumatic actuation of the pneumatic parking brake cylinders (106-3, 106-4).

12. Brake system (2, 102, 202, 302) according to any of the preceding claims, **characterized in that** the second brake control device (20, 120) is designed to continue to perform stability control (SR) in the auxiliary service braking operation (100a) by means of selective brake actuation (SR2), for example asymmetrical right-hand and left-hand brake actuation, of the left-hand and right-hand wheel brakes (6-1, 6-2, 6-3, 6-4).

13. Brake system (2, 102, 202, 302) according to any of the preceding claims, **characterized in that**
a service brake actuating device (4), for example a brake pedal (4), outputs electrical driver braking signals (S1) to the central brake control device (3),
the brake system (2, 102, 202, 302) is designed as an electronic brake system (EBS), and the central brake control device (3) outputs electrical brake control signals (BS1, BS2, BS3, BS4) to a front axle braking module (5) and rear axle braking module (15).

14. Brake system (2, 102, 202, 302) according to any of the preceding claims, **characterized in that** the second brake control device (20, 120) is designed as a trailer brake control device (120) for actuating a trailer control module (30) for pneumatically supplying a trailer (40) to be connected.

15. Brake system (2, 102, 202, 302) according to any of the preceding claims, **characterized in that** the central brake control device (3) receives external braking request signals (S2) via an in-vehicle data system (10), for example from an electronic stability system (310), a distance control system (311) and/or an emergency braking system (312), and outputs brake control signals (BS1, BS2, BS3, BS4) on the basis of the external braking request signals (S2).

16. Brake system (2, 102, 202, 302) according to any of the preceding claims, **characterized in that** in the event of electrical failure of the second brake control device (20, 120), the central brake control device (3) estimates the wheel speeds (n1, n2, n3, n4) of the first wheel speed sensor group (14A), in particular from a wheel speed (n1, n2, n3, n4) of a wheel speed sensor (12-1, 121-2, 12-3, 12-4) of the second wheel speed sensor group (14B) of the same axle (VA, HA), and/or estimates a rear wheel speed (n3, n4) from transmission output shaft rotation signals (S40) which are received via a vehicle data system (10).

17. Method for controlling an electropneumatic brake system (2, 102, 202, 302) according to any of the preceding claims, wherein, in the event of a failure of the central brake control device (3), the second brake control device (20, 120) estimates the wheel speeds (n1, n2, n3, n4) of the second wheel speed sensor group (14B) and carries out a service braking operation (100) by actuating the front and rear wheel brakes (6-i, i = 1, 2, 3, 4) and a brake slip operation (ABS) by means of brake slip control of the wheel brakes (6-i, i = 1, 2, 3, 4).

18. Method according to claim 17, **characterized in that** in the event of failure of the second brake control device (20, 120), the central brake control device (3) estimates the wheel rotational speeds (n1, n2, n3, n4) of the wheel speed sensors (12-i) of the first wheel speed sensor group (14A) and carries out brake slip control (ABS) of the wheel brakes (6-i) of the first wheel speed sensor group (14A).

19. Vehicle (1), in particular a utility vehicle (1) or a vehicle trailer (40), comprising an electropneumatic brake system (2, 102, 202, 302) according to any of claims 1 to 16, in particular for carrying out a method according to any of claims 17 to 18.

## Revendications

1. Système de freinage électropneumatique (2, 102, 202, 302) pour un véhicule utilitaire (1), le système de freinage (2, 102, 202, 302) présentant au moins :
un premier cylindre de frein avant (6-1) et un deuxième cylindre de frein avant (6-2) sur un essieu avant (VA),
un troisième cylindre de frein arrière (6-3) et un quatrième cylindre de frein arrière (6-4) sur un essieu arrière (HA),
un dispositif de commande de freinage central (3) pour l'émission de signaux de commande de freinage (BS1, BS2, BS3, BS4) pour la mise sous pression pneumatique des cylindres de frein (6-i, i = 1, 2, 3, 4), les cylindres de frein (6-i) étant prévus pour le freinage de roues de véhicule (VL, VR, HL, HR),
deux capteurs de vitesse de rotation de roue avant (12-1, 12-2) et deux capteurs de vitesse de rotation de roue arrière (12-3, 12-4) étant prévus pour la détection de vitesses de rotation de roue (n1, n2, n3, n4) des roues de véhicule (VL, VR, HL, HR) et pour l'émission de signaux de vitesse de rotation de roue (S12-i, i = 1, 2, 3, 4),
un second dispositif de commande de freinage (20, 120) pour la commande des cylindres de frein (6-i) en cas de panne du dispositif de commande de freinage central (3) en tant que mode de freinage auxiliaire d'assistance au moins partiellement électrique, les quatre capteurs de vitesse de rotation de roue (S12-i, i = 1, 2, 3, 4) étant divisés en un premier groupe de capteurs de vitesse de rotation de roue (14A, 214A, 314A) et en un second groupe de capteurs de vitesse de rotation de roue (14B, 214B, 314B), le premier groupe de capteurs de vitesse de rotation de roue (14A, 214A, 314A) émettant ses signaux de capteurs de vitesse de rotation de roue (S12-i) vers le second dispositif de commande de freinage (20, 120), lequel transmet les signaux de capteurs de vitesse de rotation de roue (S12-i) au dispositif de commande de freinage central (3), et le second groupe de capteurs de vitesse de rotation de roue (14B, 214B, 314B) émettant ses signaux de capteurs de vitesse de rotation de roue (S12-i) vers le dispositif de commande de freinage central (3), et
le dispositif de commande de freinage central (3) étant configuré pour commander électriquement une régulation du patinage (ABS) des roues de véhicule (VL, VR, HL, HR), et, en cas de panne du dispositif de commande de freinage central (3), le second dispositif de commande de freinage (20, 120) étant configuré pour commander, au moyen des signaux de capteurs de vitesse de rotation de roue (S12-i) du premier groupe de capteurs de vitesse de rotation de roue (14A, 114A, 214A, 314A), une régulation auxiliaire du patinage de freinage (H_ABS) des cylindres de frein (6-i, i = 1, 2, 3, 4),
le second dispositif de commande de freinage (20, 120) présentant une soupape de dérivation électromagnétique avant (21) pour la commande de redondance pneumatique (105-1) des freins de roue avant (6-1, 6-2) et/ou une soupape de dérivation électromagnétique arrière (23) pour la commande de redondance pneumatique (105-2) des freins de roue arrière (6-3, 6-4), pour le mode de freinage auxiliaire redondant (105) en cas de panne du dispositif de commande de freinage central (3).

2. Système de freinage (2, 102, 202, 302) selon la revendication 1,
**caractérisé en ce que** le dispositif de commande de freinage central (3) présente une première alimentation en tension (U1) et le second dispositif de commande de freinage (20) présente une seconde alimentation en tension (U2) séparée de la première alimentation en tension (U1).

3. Système de freinage (2, 102, 202, 302) selon la revendication 1 ou 2, **caractérisé en ce qu'**une connexion de données directe (16), par ex. un bus de données (16), est prévue entre les deux dispositifs de commande de freinage (3, 20, 120).

4. Système de freinage (2, 102, 202, 302) selon la revendication 1, **caractérisé en ce que** les cylindres de frein avant (6-1, 6-2) sont commandés pneumatiquement par l'intermédiaire de respectivement une soupape d'arrêt ABS avant (7-1, 7-2), le dispositif de commande de freinage central (3) émettant des signaux de commande de freinage (BS1, BS2) électriques aux soupapes d'arrêt ABS avant (7-1, 7-2).

5. Système de freinage (2, 102, 202, 302) selon l'une des revendications 1 à 3, **caractérisé en ce qu'**un modulateur de freins d'essieu avant (5) est prévu pour la commande pneumatique des deux cylindres de frein avant (6-1, 6-2), lequel modulateur reçoit des signaux de commande de freinage (BS1, BS2) en provenance du dispositif de commande de freinage central (3), de préférence en tant que soupape relais proportionnelle (5) pour la commande de valeurs de commande de pression analogiques (p_6_1, p_6_2_) à partir d'un réservoir (PSII) raccordé.

6. Système de freinage (2, 102, 202, 302) selon l'une des revendications précédentes, **caractérisé en ce qu'**un module de freinage d'essieu arrière (15) est prévu pour la commande pneumatique des deux cylindres de frein arrière (6-3, 6-4), en particulier en fonction de signaux de commande de freinage (BS3, BS4) électriques du dispositif de commande de freinage central (3).

7. Système de freinage (2, 102, 202, 302) selon l'une des revendications précédentes, **caractérisé en ce que** la commande de redondance pneumatique (105-2) des freins de roue arrière (6-3, 6-4) s'effectue par l'intermédiaire d'un module de freinage de roue arrière (15).

8. Système de freinage (2) selon l'une des revendications précédentes, **caractérisé en ce que** les capteurs de vitesse de rotation de roue (12-i, i = 1, 2, 3, 4) sont divisés en croix dans les groupes de capteurs de vitesse de rotation de roue (14A, 14B), par ex. avec le capteur de vitesse de rotation de roue avant gauche (12-1) et le capteur de vitesse de rotation de roue arrière droit (12-4) dans le premier groupe de capteurs de vitesse de rotation de roue (14A) et le capteur de vitesse de rotation de roue avant droit (12-2) et le capteur de vitesse de rotation de roue arrière gauche (12-3) dans le second groupe de capteurs de vitesse de rotation de roue (14B).

9. Système de freinage (202) selon l'une des revendications 1 à 7, **caractérisé en ce qu'**un des deux groupes de capteurs de vitesse de rotation de roue (214A, 214B) présente uniquement un capteur de vitesse de rotation de roue avant (12-1, 12-2) et
les deux capteurs de vitesse de rotation de roue arrière (12-3, 12-4) et l'autre capteur de vitesse de rotation de roue avant (12-1, 12-2) sont reçus dans l'autre groupe de capteurs de vitesse de rotation de roue, en particulier le second groupe de capteurs de vitesse de rotation de roue (214B), les dispositifs de commande de freinage (3, 20) étant configurés pour recevoir des signaux de vitesse de rotation d'arbres de sortie de transmission (S40) par l'intermédiaire d'un système de données interne au véhicule (10), pour l'estimation des vitesses de rotation de roue (n3, n4) des roues arrière (HA-I, HA-r).

10. Système de freinage (302) selon l'une des revendications 1 à 7,
**caractérisé en ce que** les deux capteurs de vitesse de rotation de roue avant (12-1, 12-2) sont reçus dans un groupe de capteurs de vitesse de rotation de roue, par ex. le premier groupe de capteurs de vitesse de rotation de roue (314A), et les deux capteurs de vitesse de rotation de roue arrière (12-2, 12-4) sont reçus dans l'autre groupe de capteurs de vitesse de rotation de roue, par ex. le second groupe de capteurs de vitesse de rotation de roue (314B), de préférence avec la réception de signaux de vitesse de rotation d'arbres de sortie de transmission (S40) par l'intermédiaire d'un système de données interne du véhicule (10) par le dispositif de commande (3) du groupe de capteurs de vitesse de rotation de roue (314A), pour l'estimation des vitesses de rotation de roue arrière (n3, n4).

11. Système de freinage (102) selon l'une des revendications précédentes, **caractérisé en ce que** le second dispositif de commande de freinage (120) est conçu comme un dispositif de commande d'un frein de stationnement électrique (EPH), pour la commande pneumatique directe de cylindres de frein de stationnement (106-3, 106-4) pneumatiques des freins de roue arrière (116) conçus comme des cylindres de frein de service (6-3, 6-4) et des cylindres de frein de stationnement (106-3, 106-4) combinés, par ex. des cylindres Tristop (116), le dispositif de commande de frein de stationnement (120) étant configuré pour, dans le mode de freinage de service auxiliaire (100a), réaliser des processus de freinage de service et des régulations du patinage de freinage (ABS) sur les freins de roue arrière (6-3, 6-4) par la commande pneumatique des cylindres de frein de stationnement (106-3, 106-4) pneumatiques.

12. Système de freinage (2, 102, 202, 302) selon l'une des revendications précédentes, **caractérisé en ce que** le second dispositif de commande de freinage (20, 120) est configuré pour, dans le mode de freinage de service auxiliaire (100a), procéder en outre à une régulation de stabilité (SR) par une commande de freinage (SR2) sélective, par ex. asymétrique à droite et à gauche, des freins de roue gauche et droite (6-1,6-2, 6-3, 6-4).

13. Système de freinage (2, 102, 202, 302) selon l'une des revendications précédentes, **caractérisé en ce que**
un dispositif d'actionnement de frein de service (4), par ex. une pédale de frein (4), émet des signaux de freinage de conducteur (S1) électriques vers le dispositif de commande de freinage central (3),
le système de freinage (2, 102, 202, 302) est conçu en tant que système de freinage électronique (EBS), et le dispositif de commande de freinage central (3) émet des signaux de commande de freinage (BS1, BS2, BS3, BS4) électriques vers un module de freins d'essieu avant (5) et un module de freins d'essieu arrière (15).

14. Système de freinage (2, 102, 202, 302) selon l'une des revendications précédentes, **caractérisé en ce que** le second dispositif de commande de freinage (20, 120) est conçu en tant que dispositif de commande de freinage de remorque (120) pour la commande d'un module de commande de remorque (30) pour l'alimentation pneumatique d'une remorque (40) à raccorder.

15. Système de freinage (2, 102, 202, 302) selon l'une des revendications précédentes, **caractérisé en ce que** le dispositif de commande de freinage central (3) reçoit, par l'intermédiaire d'un système de données interne au véhicule (10), des signaux de demande de freinage externes (S2), par ex. en provenance d'un système de stabilité électronique (310), d'un système de régulation de distance (311) et/ou d'un système de freinage d'urgence (312), et émet, en fonction des signaux de demande de freinage externes (S2), des signaux de commande de freinage (BS1, BS2, BS3, BS4).

16. Système de freinage (2, 102, 202, 302) selon l'une des revendications précédentes, **caractérisé en ce que**, en cas de panne électrique du second dispositif de commande de freinage (20, 120), le dispositif de commande de freinage central (3) estime les vitesses de rotation de roue (n1, n2, n3, n4) du premier groupe de capteurs de vitesse de rotation de roue (14A), en particulier à partir d'une vitesse de rotation de roue (n1, n2, n3, n4) d'un capteur de vitesse de rotation de roue (12-1, 121-2, 12-3, 12-4) du second groupe de capteurs de vitesse de rotation de roue (14B) du même essieu (VA, HA), et/ou une vitesse de rotation de roue arrière (n3, n4) à partir de signaux de rotation d'arbres de sortie de transmission (S40) qui sont reçus par l'intermédiaire d'un système de données de véhicule (10).

17. Procédé pour la commande d'un système de freinage (2, 102, 202, 302) électropneumatique selon l'une des revendications précédentes, en cas de panne du dispositif de commande de freinage central (3), le second dispositif de commande de freinage (20, 120) estimant les vitesses de rotation de roue (n1, n2, n3, n4) du second groupe de capteurs de vitesse de rotation de roue (14B) et réalisant un mode de freinage de service (100) par la commande des freins de roue avant et arrière (6-i, i = 1, 2, 3, 4) et un mode de patinage de freinage (ABS) par une régulation du patinage de freinage des freins de roue (6-i, i = 1, 2, 3, 4).

18. Procédé selon la revendication 17, **caractérisé en ce que**, en cas de panne du second dispositif de commande de freinage (20, 120), le dispositif de commande de freinage central (3) estime les vitesses de rotation de roue (n1, n2, n3, n4) des capteurs de vitesse de rotation de roue (12-i) du premier groupe de capteurs de vitesse de rotation de roue (14A) et réalise une régulation du patinage de freinage (ABS) des freins de roue (6-i) du premier groupe de capteurs de vitesse de rotation de roue (14A).

19. Véhicule (1), en particulier véhicule utilitaire (1) ou remorque de véhicule (40), comportant un système de freinage (2, 102, 202, 302) électropneumatique selon l'une des revendications 1 à 16, en particulier pour la réalisation d'un procédé selon l'une des revendications 17 à 18.
